(19) **Europäisches Patentamt / European Patent Office / Office européen des brevets**

(11) **EP 4 588 258 B1**

(12) **FASCICULE DE BREVET EUROPEEN**

(45) Date de publication et mention de la délivrance du brevet:
**25.03.2026 Bulletin 2026/13**

(21) Numéro de dépôt: **23767920.4**

(22) Date de dépôt: **13.09.2023**

(51) Classification Internationale des Brevets (IPC):
*H04W 4/06* (2009.01)  *H04W 4/90* (2018.01)
*H04B 7/185* (2006.01)  *H04W 56/00* (2009.01)
*H04W 76/40* (2018.01)  *H04W 76/50* (2018.01)
*H04W 84/06* (2009.01)  *H04W 84/18* (2009.01)

(52) Classification Coopérative des Brevets (CPC):
**H04W 4/06; H04B 7/18513; H04W 4/90;**
**H04W 56/0035;** H04W 76/40; H04W 76/50;
H04W 84/06; H04W 84/18

(86) Numéro de dépôt international:
**PCT/EP2023/075192**

(87) Numéro de publication internationale:
**WO 2024/056759 (21.03.2024 Gazette 2024/12)**

(54) **TRANSMISSION BLUETOOTH D'UN SATELLITE VERS UN TERMINAL DE TÉLÉCOMMUNICATION AU SOL**

BLUETOOTH-ÜBERTRAGUNG VON EINEM SATELLITEN ZU EINEM BODEN-TELEKOMMUNIKATIONSENDGERÄT

BLUETOOTH TRANSMISSION FROM A SATELLITE TO A GROUND TELECOMMUNICATION TERMINAL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.09.2022 FR 2209237**

(43) Date de publication de la demande:
**23.07.2025 Bulletin 2025/30**

(73) Titulaires:
• **Université de Bordeaux**
  **33000 Bordeaux (FR)**
• **Institut Polytechnique de Bordeaux**
  **33400 Talence (FR)**
• **Centre National de la Recherche Scientifique**
  **75016 Paris (FR)**
• **Cymoon**
  **31300 Toulouse (FR)**

(72) Inventeurs:
• **FERRE, Guillaume**
  **33170 Gradignan (FR)**
• **LATTES, Philippe**
  **31300 Toulouse (FR)**

(74) Mandataire: **Novagraaf Technologies**
  **2 rue Sarah Bernhardt**
  **CS90017**
  **92665 Asnières-sur-Seine Cedex (FR)**

(56) Documents cités:
WO-A1-2022/076548    US-A1- 2018 239 948
US-A1- 2018 254 825    US-A1- 2022 216 896

• X: "Understanding Bluetooth Range", 19 August 2022 (2022-08-19), XP093044476, Retrieved from the Internet <URL:https://www.bluetooth.com/learn-about-bluetooth/key-attributes/range/> [retrieved on 20230504]
• X: "Bluetooth Range Estimator - Path Loss (Propagation) Models", 23 November 2023 (2023-11-23), XP093104828, Retrieved from the Internet <URL:-> [retrieved on 20231123]

- **ANONYMOUS: "Two-ray ground-reflection model - Wikipedia", 13 February 2022 (2022-02-13), XP093104829, Retrieved from the Internet <URL:https://en.wikipedia.org/w/index.php?title=Two-ray_ground-reflection_model& oldid=1071641723> [retrieved on 20231123]**

## Description

DOMAINE DE L'INVENTION

La présente invention est aux satellites, et en particulier à la transmission directe d'informations depuis un satellite vers un ou plusieurs terminaux de télécommunication.

Elle s'applique en particulier aux satellites embarquant des moyens de traitement des informations, et permet ainsi la transmission d'informations issues de ce traitement directement vers ce ou ces terminaux de télécommunication. L'invention s'applique notamment à des terminaux de type mobile ou smartphone équipés de la fonction Bluetooth.

CONTEXTE DE L'INVENTION

Lors de situations critiques comme lors de catastrophe naturelle, il peut être crucial de pouvoir informer directement les habitants vivant dans une zone concernée au plus tôt.

Or, certaines régions du monde demeurent relativement peu couvertes par les infrastructures de télécommunication, de sorte que la transmission de message d'alertes est impossible dans beaucoup de régions ou pourrait provoquer rapidement la saturation de l'infrastructure existante. Cette saturation ne permettrait pas à l'ensemble de la population concerné d'être informé suffisamment tôt, mais aussi pénaliserait les communications nécessaires aux services de secours.

En outre, dans le cas de catastrophes naturelles (inondations, tremblements de terre, incendies majeurs...), l'infrastructure de télécommunication peut être impactée, ne plus fonctionner et, ainsi, ne plus permettre la communication des informations nécessaires.

Par ailleurs, un nombre sans cesse croissant de satellites acquièrent continument un volume extrêmement important d'informations. Les satellites d'observation de notre planète sont de plus en plus nombreux et couvrent d'une façon de plus en plus précise la surface de la Terre.

Actuellement, ces informations sont transmises par les satellites d'observation vers des stations au sol, où elles peuvent être analysées. Le résultat de ces analyses peut ensuite être transmis vers les utilisateurs (ou « consommateurs ») finaux.

Le volume d'informations à traiter atteint désormais des dimensions telles qu'il s'avère difficilement exploitable et engorge les stations au sol. Il s'ensuit un délai entre la capture des informations et leur transmission aux utilisateurs qui peut être pénalisant, voire rendre ces informations obsolètes au moment de leur réception.

Des études montrent qu'un faible pourcentage des informations capturées est réellement exploité et utilisé, de sorte que les informations utiles sont noyées dans le flot d'informations inutiles.

Les progrès des systèmes embarqués permettent de disposer d'une capacité de traitement croissante au sein des satellites, et notamment des satellites d'observation, tant en termes de mémoire embarquée que de ressources de traitement numérique (CPU, GPU, circuits spécialisés...).

Toutefois, aujourd'hui, ces capacités de traitement ne permettent pas d'améliorer la chaine de transmission de l'information et d'atteindre rapidement les utilisateurs finaux, ni d'exploiter efficacement l'important volume d'informations disponibles.

Les mécanismes actuels ne permettent donc pas d'alerter la population concerné suffisamment rapidement et directement notamment en l'absence d'infrastructures de télécommunication au sol, même dans le cas où un satellite d'observation aurait permis de détecter une situation critique ou l'imminence d'une telle situation.

Cette insuffisance de l'état de la technique ne permet pas de minimiser l'impact d'une situation critique, par exemples en organisant une évacuation de la population ou, tout du moins, en empêchant la population de se rendre inconsciemment, vers une zone à risque, en alertant afin d'éviter des effets de panique, en fournissant des consignes de comportement à tenir, etc.

Il existe donc un besoin de faciliter la transmission d'informations pertinentes à une population localisée sur un site concerné par une situation critique ou par un risque imminent de situation critique, notamment en l'absence d'infrastructure de communication sol.

Le document US2022/216896A1 concerne des satellites, comportant des moyens de télécommunication cellulaires pour diffuser des informations vers au moins un terminal de télécommunication au sol, en s'appuyant sur une infrastructure terrestre du réseau cellulaire. Le document WO2022/076548A1 concerne un système et une méthode d'authentification d'un terminal mobile par un réseau de communication spatiale comprenant une constellation de satellites coopérant avec des stations terrestres, afin d'effectuer l'authentification du terminal au niveau du satellite en l'absence de connexion au réseau terrestre. Le document US2018/0239948A1 concerne un système d'imagerie par satellite comprenant une ou plusieurs modalités d'imagerie et une interface de communication sans fil permettant la transmission de données d'image ou d'informations dérivées de celles-ci vers une station de base terrestre, susceptible de relayer des messages ou alertes vers au moins un terminal de télécommunication. Le document intitulé « Understanding Bluetooth Range », publié sur Internet à l'adresse URL :https://www.bluetooth.com/learn-about-bluetooth/key-attributes/range/, en 2022, décrit un simulateur de portée Bluetooth basé sur un modèle de propagation utilisé pour des communications terrestres.

RESUME DE L'INVENTION

L'invention vise à proposer un mécanisme de diffusion (ou « broadcast » en anglais) d'information depuis les satellites directement vers les terminaux de télécommunication. Le terme « directement » signifie ici que l'information émise par un satellite est reçue par les terminaux. Autrement dit, aucune infrastructure de télécommunication au sol (stations de base, réseau cellulaire, etc.) n'est concernée par cette diffusion.

À cette fin, selon un premier aspect, la présente invention peut être mise en œuvre par un dispositif apte à être embarqué sur un satellite, comportant des moyens de télécommunication pour diffuser des informations directement vers au moins un terminal de télécommunication au sol ; lesdits moyens de télécommunications étant adaptés pour diffuser lesdites informations via le protocole de communication Bluetooth à basse énergie, BLE, selon un mode « publicité », selon lequel aucune connexion entrante n'est acceptée, ledit au moins un terminal de télécommunication étant compatible avec ledit protocole de communication et configuré pour recevoir lesdites informations sans envoyer aucune demande de connexion vers les moyens de communications du satellite, lesdits moyens de télécommunication comprenant :

- une antenne directive adaptée pour émettre un signal portant lesdites informations dans un cône de diffusion, avec une puissance d'émission supérieure ou égale à quelques Watts dans une bande de fréquences entre 2.4 et 2.8 GHz, un débit d'au moins 125 kbits/s,
- ladite puissance d'émission étant déterminée de sorte qu'une puissance d'un signal reçu par au moins un dit terminal situé dans le cône de diffusion soit au-dessus d'une sensibilité donnée de réception dudit terminal pour ledit mode « publicité », en fonction d'une élévation du satellite par rapport au sol, d'une directivité de l'antenne, de paramètres de pointage du satellite et de pertes de transmission standard liées à une traversée de l'atmosphère.

Le satellite peut être un satellite de télécommunication, un satellite d'observation de la terre (notamment un satellite de télédétection), ou tout autre type de satellite.

Ce mode de réalisation de l'invention permet également de tirer profit des capacités croissantes des satellites d'observation, et d'éviter les retards de traitement (et les non-traitements) de la chaîne de traitement habituelle.

Pour ce faire le dispositif comporte en outre :

- au moins un capteur pour acquérir des informations primaires
- des moyens de traitement pour analyser lesdites informations primaires pour détecter au sein desdites informations primaires une situation correspondant à un critère, et déterminer des informations secondaires relatives à ladite situation ; et
- lesdits moyens de télécommunication sont prévus pour transmettre lesdites informations secondaires au sein desdites informations.

Ces informations secondaires correspondent aux (ou font parties des) informations diffusées par le dispositif précédemment défini. Selon un mode de réalisation, il y a donc équivalence entre les deux termes lorsque seules les informations secondaires sont diffusées.

Suivant des modes de réalisation, l'invention comprend une ou plusieurs des caractéristiques suivantes qui peuvent être utilisées séparément ou en combinaison partielle entre elles ou en combinaison totale entre elles :

lesdites informations primaires sont des images.
les moyens de télécommunication sont adaptés pour diffuser lesdites informations via le protocole Bluetooth, par exemple selon un mode BLE 125k S=8.
lesdits moyens de traitement sont adaptés pour précompenser un décalage fréquentiel lié à l'effet Doppler en fonction d'une position dudit satellite, d'une position dudit au moins un terminal de télécommunication, et de la vitesse dudit satellite par rapport au sol.
lesdites informations secondaires sont représentatives d'une alerte.

Selon un second aspect, l'invention peut également être mise en œuvre par un satellite comportant un dispositif tel que précédemment défini, avec éventuellement une ou plusieurs des caractéristiques optionnelles décrites.

Selon un autre aspect, l'invention peut également être mise en œuvre par un système comportant au moins un tel satellite et ledit au moins un terminal de télécommunication.

Selon un autre aspect, l'invention concerne également un procédé de diffusion d'informations depuis un satellite directement vers au moins un terminal de télécommunication au sol, ledit procédé met en œuvre le protocole Bluetooth à basse énergie, BLE, dans un mode « Publicité », selon lequel des moyens de télécommunications du satellite sont adaptés pour diffuser lesdites informations sans accepter aucune connexion entrante et ledit au moins un terminal de télécommunication (2) est compatible avec ledit protocole et configuré pour recevoir lesdites informations sans envoyer aucune demande de connexion vers les moyens de communications du satellite, ledit procédé comprenant :

- l'émission par une antenne directive adaptée d'un signal portant lesdites informations dans un cône de diffusion, avec une puissance d'émission, produite par un amplificateur de puissance conforme aux exigences d'un système embarqué, ladite puissance d'émission étant supérieure ou égale à quelques Watts, dans une bande de fréquences entre 2.4 et 2.8 GHz, avec un débit de 125 kbits/s, ladite puissance d'émission étant déterminée de sorte qu'une puissance d'un signal reçu par au moins un dit terminal situé dans le cône de diffusion, soit au-dessus d'une sensibilité de réception dudit terminal, correspondant audit mode « Publicité », en fonction d'une élévation du satellite par rapport au sol, d'une directivité de l'antenne, de paramètres de pointage du satellite et de pertes de transmission standard liées à une traversée de l'atmosphère.

Suivant des modes de réalisation, le procédé est adapté pour mettre en œuvre une ou plusieurs des caractéristiques précédemment décrites, mutatis mutandis, qui peuvent être utilisées séparément ou en combinaison partielle entre elles ou en combinaison totale entre elles.

Selon un autre aspect, l'invention peut être mise en œuvre par un programme d'ordinateur comprenant des instructions qui, lorsque le programme est exécuté par un ordinateur, conduisent celui-ci à mettre en œuvre le tel que précédemment défini.

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES FIGURES

Les dessins annexés illustrent l'invention :

[Fig. 1] représente schématiquement un exemple d'architecture fonctionnelle selon un mode de réalisation de l'invention.

[Fig. 2] illustre schématiquement un exemple d'architecture fonctionnelle détaillée des moyens de traitement, selon un mode de réalisation de l'invention

[Fig. 3] illustre une simulation de l'évolution de la puissance de réception par rapport à la puissance de transmission du satellite, selon un mode de réalisation de l'invention

[Fig. 4] illustre une simulation de l'évolution de la puissance de réception par rapport à la puissance de transmission du satellite, selon un autre mode de réalisation de l'invention

DESCRIPTION DETAILLEE DE MODES DE REALISATION DE L'INVENTION

L'invention est relative à tout type de satellites, notamment les satellites de télécommunication et les satellites d'observation.

Selon des modes de réalisation, elle concerne en particulier les satellites d'observation de la terre, et notamment les satellites de télédétection.

Elle peut aussi concerner les satellites de télécommunication en orbite basse de type constellation servant de relais vers la terre d'informations pouvant venir d'autres satellites, notamment d'observation de la terre.

Elle peut également concerner la transmission par des satellites de télécommunication d'informations provenant de stations au sol.

Un satellite d'observation de la Terre est un satellite artificiel utilisé pour effectuer des observations géophysiques et géographiques de la Terre depuis une orbite terrestre. Cette catégorie de satellite est utilisée à des fins telles que la météorologie, l'inventaire des ressources naturelles, la géodésie, l'étude et la modélisation du climat, la prévention et le suivi des catastrophes naturelles, la reconnaissance militaire, etc.

La majorité des satellites d'observation de la Terre font partie de la catégorie des satellites de télédétection dont les instruments analysent les ondes électromagnétiques (lumière visible mais aussi ultraviolet, infrarouge, rayons X, etc.) émises soit par l'objet observé, soit par renvoi d'un train d'ondes émis par le satellite. Typiquement les instruments utilisés sont des caméras, spectromètres, radars, radiomètres, etc. Par exemple, les satellites Pléiades, « Sentinel » ou METEOSAT entrent dans cette catégorie des satellites de télédétection.

Une deuxième catégorie de satellites d'observation de la Terre effectue uniquement des mesures in situ comme GOCE qui mesure le champ gravitationnel terrestre ou SWARM qui mesure le champ magnétique terrestre et qui ne sont donc pas des satellites de télédétection. Ils utilisent des instruments comme le magnétomètre, des récepteurs passifs comme les réflecteurs laser, GPS, et accéléromètres ou des détecteurs d'ions ou d'atomes neutres, etc.

Un satellite d'observation comporte, d'une façon très générale, des moyens embarqués pour la gestion proprement dite du satellite (alimentation, positionnement, etc.) et un dispositif représentant sa charge utile, c'est-à-dire embarquant les fonctions du satellite utiles pour des tiers et non pour son propre fonctionnement. Un tel dispositif pour satellite d'observation comprend donc des moyens permettant de remplir sa fonction d'observation, c'est-à-dire essentiellement des moyens d'observation et des moyens de télécommunication afin de transmettre les informations observées vers le sol.

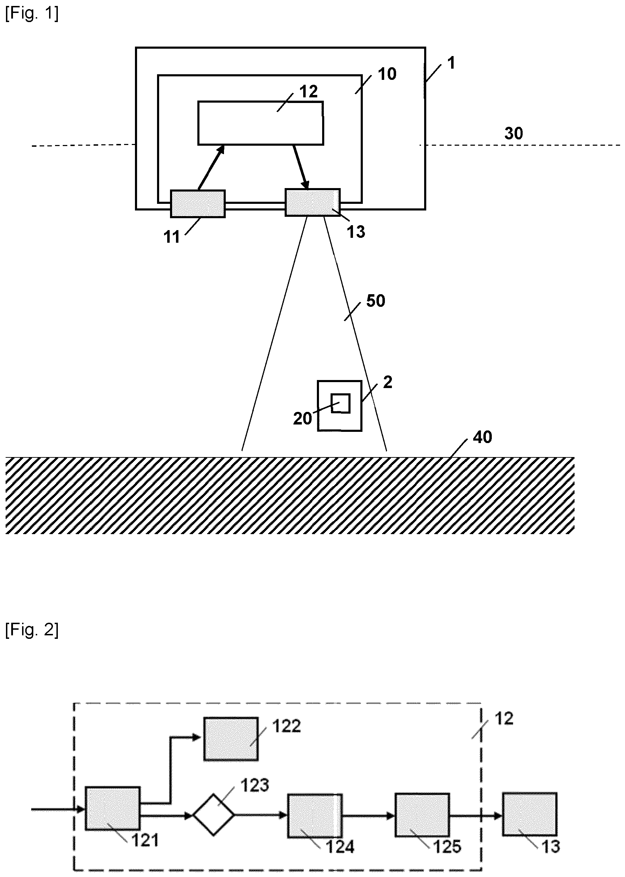

L'invention concerne principalement un tel dispositif, référencé 10 sur le FIGURE 1, pour un satellite 1.

Sur la figure 1, le satellite 1 est situé sur une orbite 30 autour de la terre 40.

Selon un mode de réalisation de l'invention, le satellite est situé sur une orbite basse, LEO (pour « Low Earth Orbit » en anglais), mais, selon d'autres modes de réalisation, il peut être sur d'autres orbites (GEO pour « Geostationary Earth Orbit » en anglais, ou orbite géostationnaire, etc.)

Le dispositif 10 est apte à être embarqué dans le satellite 1 et, sur la figure 1, il est représenté effectivement embarqué dans le satellite.

Selon l'invention, ce dispositif 10 comprend notamment des moyens de télécommunication 13 pour diffuser des informations directement vers au moins un terminal de télécommunication 2 au sol 40.

Le signal émis par les moyens de télécommunication 13 forme un cône 50 dont l'ouverture (ou angle solide) dépend de la directivité de ces moyens (antenne). Les terminaux mobiles situés au centre de ce cône de diffusion 50 reçoivent le signal dans les meilleures conditions.

Dans le cas où le satellite est un satellite d'observation, le dispositif 10 peut en outre comprendre :

- un, ou des capteurs 11 pour acquérir des informations primaires et
- des moyens de traitement 12 pour analyser ces informations primaires afin de détecter au sein de celles-ci, une situation correspondant à un critère prédéfini, et déterminer des informations secondaires relatives à ladite situation.

Les moyens de télécommunication 13 sont alors prévus pour transmettre ces informations secondaires (autrement dit, elles représentent les informations indiquées au paragraphe précédent)

Dans le cas d'un satellite de télécommunication, les informations diffusées peuvent être acquises par d'autres moyens, par exemple reçues par le satellite, d'une station au sol ou d'un autre satellite. On peut par exemple imaginer qu'un satellite d'observation transmette des informations secondaires vers un satellite de transmission, charge à lui de les diffuser vers les terminaux au sol. Ce mode de réalisation peut permettre de délester les satellites d'observation de cette fonction et/ou d'atteindre d'autres couvertures puisque chaque satellite ne peut diffuser que vers une zone géographique définie (et variable au cours du temps, dans le cas de satellites défilants).

Les informations primaires acquises, ou « capturées », par le ou les capteurs 11 correspondent aux diverses informations observées par les satellites d'observations. Comme vu précédemment, les satellites d'observation sont extrêmement variés, et donc le spectre d'observation est vaste : optique, radar, infrarouge, ultraviolet, écoute de signaux radioélectriques ou électromagnétiques, de rayonnements ioniques, etc.

Parmi les signaux électromagnétiques, on peut par exemple citer les signaux de balise de bateaux AIS (« Automatic Identification System » en anglais, c'est -à-dire « système d'identification automatique ») qui sont des messages électroniques entre navires par ondes radio VHF, qui permet aux navires et aux systèmes terrestres de surveillance de trafic de connaître l'identité, le statut, les caractéristiques, la position, la route et la vitesse des navires se situant dans la zone de navigation. Des mécanismes de détection de ces signaux par satellites sont déjà proposés. On peut également citer les signaux ADS-B (pour « Automatic dependent surveillance-broadcast » en anglais) qui représentent un système de surveillance coopératif pour le contrôle du trafic aérien et d'autres applications connexes. Un avion équipé de l'ADS-B détermine sa position par un système de positionnement par satellite (GNSS pour « Géolocalisation et Navigation par un Système de Satellite ») et envoie périodiquement cette position et d'autres informations aux stations sol et aux autres appareils équipés de l'ADS-B évoluant dans la zone.

Les informations primaires peuvent être de nature extrêmement variée.

Selon un mode de réalisation, les informations primaires sont des images. Ces images peuvent être des représentations bidimensionnelles d'une portion observée de la terre. Typiquement, les satellites d'observations acquièrent des flux d'images, chaque image étant associée à une localisation du satellite par rapport à la terre.

Le contenu de l'image (c'est-à-dire l'information associée à chaque point de la surface observée de la terre) dépend du type de capteur(s) 11 : valeur optique (ou « photographique »), radar, infrarouge, etc.

Les informations primaires sont analysées par les moyens de traitement 12 du dispositif 10 embarqué dans le satellite 1.

Ces moyens de traitement peuvent être adaptés pour effectuer cette analyse selon une granularité propre à la structure des informations primaires. Par exemple, cette analyse peut être effectuée image par image.

Cette étape d'analyse est représentée par la référence 121 sur la figure 2.

Le résultat de cette analyse peut suivre un traitement habituel, 122, correspondant au fonctionnement normal du satellite 1. Par exemple, ce résultat peut être mémorisé dans une mémoire embarquée, il peut être envoyé vers une station au sol pour traitement ultérieur, etc. Cette étape est optionnelle et extérieure à l'invention.

Une étape de test 123 est prévue pour détecter au sein des informations primaires une situation correspondant à un critère.

Le critère en question peut être varié. D'une façon générale, il vise à discriminer les situations normales et les situations critiques au sein des informations primaires. Il s'agit là d'une problématique classique de classification et de traitement de données numériques. Différentes solutions existent, accessibles à l'homme du métier et qui ne nécessitent pas de développement ici.

On peut indiquer toutefois que ce critère peut être fixe ou adaptatif. Il peut être simple ou multiple. Il peut par exemple être formalisé par une fonction de coût (ou « loss function » en anglais) dans le cas où l'analyse est mise en œuvre par un réseau de neurones multicouche.

L'état de la technique comprend des systèmes d'analyse d'images, au sol, permettant la mesure des volumes de précipitation, la mesure des niveaux des cours d'eau, la mesure des coulées de lave ou de boue, la détection des incendies, la détection de l'arrivée de tempêtes, etc.

On peut citer pour référence l'ouvrage « Aléas et surveillance de l'activité volcanique 2 : sismologie, déformation et télédétection » de Jean-François Lenat, ISTE éditions, 2022, ISBN 9781789480450, ou les articles de Bonakdari, H., Zaji, A. H., Soltani, K., & Gharabaghi, B., « Amélioration de la précision d'un système d'alerte de crue par télédétection à l'aide d'une méthode de prétraitement multi-objectifs pour la détection et l'élimination des défauts de signal » in Comptes Rendus Géosciences, 352, 73-86 (2020), ou de Catry, T., Révillion, C., Mouquet, P., & Pennober, G., « Apports de l'imagerie satellite pour le suivi de l'impact des événements cycloniques à Madagascar. Complémentarité des échelles et des capteur », in EchoGéo, (51), 2020.

Tant qu'une situation correspondant au critère n'est pas détectée, le mécanisme peut reboucler vers l'étape 121 d'analyse d'une nouvelle portion des informations primaires (une nouvelle image, par exemple).

Lorsqu'une situation correspondant au critère est détectée, une étape 124 de détermination d'informations secondaires relatives à cette situation est déclenchée.

Ces informations secondaires peuvent comprendre le résultat de l'analyse effectuée en étape 121.

Il est également possible d'enrichir les informations secondaires avec d'autres données, telles que par exemple : un identifiant du satellite, un horodatage, une localisation du satellite, etc.

D'une façon générale, les informations secondaires correspondent à un niveau sémantiquement plus élevé que les informations primaires, du fait du traitement appliqué. Elles sont également de taille moins importante.

La part des informations secondaires, fournies directement par l'analyse 121 peuvent contenir des données de même nature que les informations primaires.

Par exemple, elles peuvent contenir une image représentant une zone géographique mais représentant des données sémantiques issues du traitement : par exemple, une segmentation peut discriminer les points de l'image correspondant à une situation critique détectée, ou différents niveaux de couleur peuvent correspondre à différents niveaux de sévérité d'une situation, ou à un type de situation (inondation, incendie, destruction, etc.), des étiquettes peuvent être associées aux points de l'image, ou à des zones issues d'une segmentation, et représentant le type de terrain ou la couverture nuageuse, etc.

Par ailleurs, d'autres types de données peuvent résulter de l'analyse 121 sans être de même nature que les informations primaires : par exemple, un type de situation critique, un niveau de sévérité estimé, une taille de la zone concernée, une géolocalisation de la zone concernée, etc.

Selon un mode de réalisation, ces informations secondaires sont représentatives d'une alerte. Les terminaux au sol peuvent disposer de moyens pour effectivement alerter les utilisateurs en fonction de ces informations secondaires.

On comprend bien que différents modes de réalisation sont possibles pour déterminer des informations secondaires qui puissent être convenablement exploités par des terminaux de télécommunication au sol, doté d'une application logicielle adaptée.

Ces informations secondaires sont ensuite mises en forme, étape 125, en vue de la diffusion par les moyens de télécommunication 13 embarqués dans le satellite.

La mise en forme vise à formater les données numériques afin de les convertir en données analogiques, typiquement par modulation d'un signal porteuse, selon les spécifications d'un protocole de télécommunication utilisé par les moyens de télécommunication 13 pour diffuser les informations vers les terminaux au sol.

Les références 121-125 de la figure 2 peuvent être vues comme autant d'étapes d'un procédé mettant en œuvre un mode de réalisation de l'invention, mais aussi comme des modules d'une architecture fonctionnelle. Les moyens de traitement 12 peuvent être mis en œuvre par un assemblage de circuits électroniques et/ou par des modules logiciels fonctionnant sur une infrastructure de traitement de l'information.

Selon un mode de réalisation de l'invention, le protocole utilisé est le protocole Bluetooth.

Selon l'encyclopédie participative Wikipédia, « Bluetooth est une norme de télécommunications permettant l'échange bidirectionnel de données à courte distance en utilisant des ondes radio UHF sur la bande de fréquence de 2,4 GHz. Son but est de simplifier les connexions entre les appareils électroniques à proximité en supprimant des liaisons filaires. Elle peut remplacer par exemple les câbles entre ordinateurs, tablettes, haut-parleurs, téléphones mobiles entre eux ou avec des imprimantes, scanneurs, claviers, souris, manettes de jeu vidéo, téléphones portables, assistants personnels, systèmes avec mains libres pour microphones ou écouteurs, autoradios, appareils photo numériques, lecteurs de code-barres et bornes publicitaires interactives. » (https://fr.wikipedia.org/wiki/Bluetooth)

Un des avantages du protocole Bluetooth est d'être implémenté sur une très vaste majorité des terminaux de télécommunication en circulation sur le marché.

Le mécanisme proposé peut donc fonctionner sur le parc de terminaux existant et ne nécessite aucune modification matérielle de ces terminaux. En particulier, ce mécanisme s'oppose à l'utilisation de terminaux spécifiques pour la télécommunication avec des satellites, comme ceux adaptés au réseau Iridium, qui sont bien moins répandus et plus coûteux.

Par ailleurs, la réception d'informations par les terminaux au sol est indépendante de la souscription à un abonnement d'aucun type. Cela permet ainsi d'adresser tous les possesseurs de terminaux même sans abonnement à un opérateur et même dans des zones non couvertes par des réseaux au sol.

Aussi, la diffusion d'information secondaire par un satellite via ce protocole de télécommunication permet sa bonne réception par la majorité des terminaux existant dans le monde et donc, par exemple, d'alerter une grande part des personnes concernés par une situation critique ou par un risque détecté.

Dans la mesure où les terminaux de télécommunication peuvent être des terminaux mobiles, notamment de type « smartphone », susceptibles d'être constamment accessibles aux utilisateurs y compris dans leur déplacement, ceux-ci peuvent être alerté excessivement rapidement, dès la détection par un satellite d'une situation critique, ou d'un risque imminent de situation critique, indépendamment de la couverture réseau.

En outre, il existe un protocole Bluetooth permettant la diffusion (ou « broadcast » en anglais) d'informations vers un ensemble de terminaux. On rappelle qu'en télécommunication, la diffusion (parfois appelée également télédiffusion) est une technique de transmission monodirectionnelle (ou unidirectionnelle) de signaux vers un grand nombre de clients. Elle s'oppose au multicast et à l'unicast qui représentent des liaisons directes voire individualisées, ou « connectées », entre l'émetteur et le récepteur.

Ainsi, selon l'invention, les moyens de télécommunication 13 du satellite 1 n'ont pas à connaître individuellement les terminaux au sol, mais se contentent d'émettre. Lorsqu'ils reçoivent les informations, les terminaux au sol peuvent reconnaître qu'il s'agit d'un signal diffusé et, en conséquence, se considérer comme récepteur (sans que leur adresse propre soit indiqué dans le signal comme en mode unicast ou multicast par exemple).

Il apparaît clairement que le protocole Bluetooth a été conçu pour des communications entre équipements proches. Son utilisation pour une diffusion d'information entre un satellite et des terminaux au sol est donc complétement disruptive.

Les inventeurs ont conduit des simulations afin de démontrer que le protocole Bluetooth est utilisable sur la longue distance dans le contexte de l'invention, selon certaines conditions définies par les inventeurs.

Par ailleurs, une autre contrainte du fonctionnement habituel du protocole Bluetooth est la phase initiale d'appariement entre deux équipements avant l'échange d'information. Dans le cadre de l'invention, il est impossible de mettre en place un tel appariement entre le satellite et les terminaux au sol d'une part car cela nécessiterait une puissance d'émission des terminaux au sol incompatible avec leurs spécifications, mais aussi car cela impliquerait une grande lourdeur et une charge importante sur les satellites qui, potentiellement, devraient s'apparier à des milliers de terminaux au sol, et, si le satellite est défilant, devraient renouveler cette opération régulièrement.

Les inventeurs ont déterminé un mode de fonctionnement particulier du protocole Bluetooth, dit Publicité ou « Advertising », qui permet de répondre aux deux contraintes : éviter le mécanisme d'appariement, et permettre la diffusion, et peut ainsi permettre de mettre en œuvre l'invention.

Ces aspects du protocole Bluetooth sont décrits et spécifiés dans le document normatif « Core specification », disponible sur le site officiel http://www.bluetoothe.com. Ce document est actuellement disponible dans sa version 5.3, datée du 13 juillet 2021.

Le mode « Advertising » permet plusieurs types de connexion via le mécanisme « Generic Access Profile » (GAP), décrit en section 6.2. Il y a notamment un mode « Broadcaster » (diffuseur en français), dans lequel l'émetteur envoie des informations sans permettre (et donc sans attendre) de retour. Ce mode peut typiquement être utilisé pour mettre en œuvre l'invention.

Selon un mode de réalisation, ce mode de fonctionnement correspond au protocole BLE. Selon un mode de réalisation, le protocole BLE est utilisé.

Bluetooth à basse consommation ou Bluetooth à basse énergie (en anglais : « Bluetooth Low Energy », BLE ou BTLE) est une technique de transmission sans fil créée par Nokia en 2006 sous la forme d'un standard ouvert basé sur le Bluetooth, qu'il complète mais sans le remplacer. Il est intégré aux normes Bluetooth depuis la version v4.0 publiée en juin 2010 par le Bluetooth SIG.

Selon Wikipédia, « comparé au Bluetooth, le BLE permet un débit du même ordre de grandeur (1 Mbit/s) pour une consommation d'énergie 10 fois moindre. Cela permet d'intégrer cette technologie dans de nouveaux types d'équipements tels que montres, appareils de surveillance médicale ou capteurs pour sportifs. La technologie permet aux appareils de se connecter dans un rayon d'environ 10 mètres. »

Un des intérêts du protocole BLE est sa consommation énergétique plus faible, ce qui est un point important dans le cadre d'un dispositif embarqué sur un satellite

Les appareils Bluetooth envoient des paquets pour diffuser les données dans le mode de publicité, ou « Advertising » selon terminologie du standard en langue anglaise. Ceux-ci sont des blocs de 31 octets pouvant contenir des informations propres à l'émetteur. Ils sont également utilisés pour permettre à d'autres appareils de se connecter à eux (appariment). Il existe plusieurs types de paquets d' « Advertising » permettant à chacun de réaliser différentes fonctionnalités (utilisés pour Advertising Direct ou Indirect avec ou sans possibilité de connexion).

Le Bluetooth permet l'échange bidirectionnel ou unidirectionnel de données en utilisant des ondes radio UHF et opère dans la bande 2.4 GHz. 40 canaux physiques sont alloués pour un multiplexage en temps et en fréquence, chacun étant espacés de 2 MHz (c'est à dire de 2.4 GHz à 2.8 GHz). Certains canaux sont utilisés pour la publicité (« advertising »), alors que d'autres seront utilisés pour les transmissions en mode connecté (« unicast » ou « multicast »).

Selon le standard BLE, un objet peut avoir jusqu'à 4 fonctions. Notamment :

le diffuseur (ou « Broadcaster » en anglais) : il peut faire office de serveur. Ainsi, il a pour objectif de transmettre régulièrement des données à un appareil, mais il n'accepte aucune connexion entrante ;

L'observateur (ou « Observer » en anglais) : l'objet peut seulement écouter et interpréter les données envoyées par un « broadcaster ». Dans cette situation-là, l'objet ne peut pas envoyer de connexions vers le serveur.

Selon ce mode de réalisation, le satellite peut implémenter la partie « diffuseur » de ce mode de fonctionnement du protocole BLE, tandis que les terminaux de télécommunication au sol implémentent la partie « observateur ».

Comme on a vu précédemment, les informations secondaires peuvent (du fait de leur contenu de haut niveau sémantique) être de faible volumétrie. Dès lors, l'emploi du protocole BLE se trouve justifié.

Selon la norme, le protocole BLE peut fonctionner selon différents débits.

Selon un mode de réalisation de l'invention, le débit de 125kbits/s. est utilisé. En outre le mode S=8 peut être utilisé. Ce mode indique que 8 symboles par donnée sont utilisés pour la transmission lors de la modulation, ce qui réduit le débit utile mais permet une meilleure robustesse et donc sensibilité. Ce mode d'utilisation du protocole BLE correspond à une sensibilité de -103dBm.

Ce protocole BLE est décrit et spécifié dans le document normatif précité. En page 218, notamment on trouve un tableau résumant les différents modes possibles en BLE.

Il est nécessaire que la puissance du signal reçu par le téléphone de télécommunication au sol soit au-dessus de la sensibilité du récepteur.

Selon les simulations effectuées par les inventeurs, ce mode de fonctionnement du protocole BLE (125k S=8) permet, en utilisant un satellite en orbite basse, de fermer le bilan de liaison à l'aide d'antennes directives sur le satellite, moyennant une puissance de transmission en phase avec ce qu'un amplificateur de puissance du commerce peut générer depuis un satellite en orbite basse.

La directivité de l'antenne peut dépendre d'un compromis entre la stabilité du satellite et la puissance maximale consommée. En effet, plus l'antenne est directive et plus il faudra un satellite stable d'un point de vue du pointage vers la terre et moins important est le besoin en puissance d'émission.

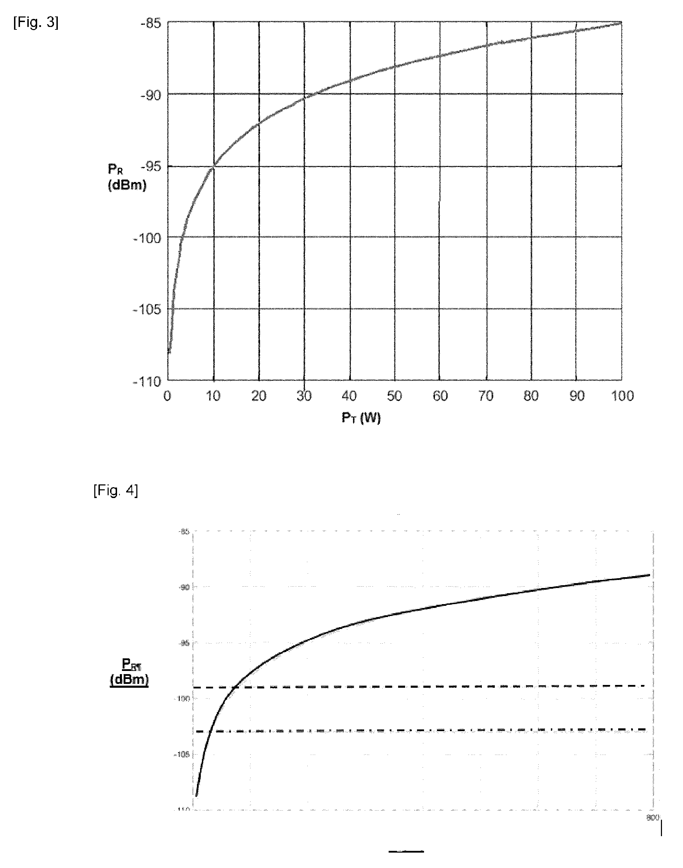

La Figure 3 illustre une simulation de l'évolution de la puissance de réception PR (par un terminal de télécommunication au sol) par rapport à la puissance de transmission du satellite PT. Cette simulation a été obtenue en considérant une antenne d'émission présentant une directivité définie par un angle d'ouverture à - 3dB de 20° et un gain de 18 dBi, et un récepteur situé au nadir du satellite (c'est-à-dire au point du sol situé à la verticale entre le satellite le centre de la Terre).

Cette courbe montre que pour des faibles puissances de transmission PT, la puissance de réception croît très vite. Ainsi, à partir de quelques watts, de puissance transmise par le satellite, la sensibilité nécessaire pour le récepteur (c'est-à-dire -103 DB) est atteinte. Dans l'exemple de la courbe de la figure 3, cette sensibilité est atteinte pour environ 1.5 W de puissance transmise. L'élévation du satellite, la couverture nuageuse, les paramètres de pointage du satellite vers le sol sont des paramètres pouvant influer ce chiffre .

La Figure 4 illustre une autre simulation de l'évolution de la puissance de réception PR (par un terminal de télécommunication au sol) par rapport à la puissance de transmission du satellite PT, basée sur des hypothèses différentes, notamment un gain d'antennes inférieur et la prise en compte du fait que le récepteur puisse être situé ailleurs qu'au nadir et notamment en bordure de couverture.

On détaille ci-après un exemple de calcul de budget de liaison, selon les hypothèses de la simulation de la Figure 4 et en appliquant de façon réaliste une marge d'erreur du bilan de liaison.

On considère ainsi les paramètres suivants :

- Mode BLE 125k S=8,
- Elévation du satellite H égale à 550 km,
- Sensibilité du récepteur BLE : S = -103dBm,
- Marge de budget de liaison Marge = 4dB,
- Pertes atmosphériques à 2.4GHz : $L_{atm}$ = 0.5dB,
- Pertes de polarisation : $L_{pol}$ = 3dB,
- Pertes d'insertion $L_i$ = 2dB,
- Directivité de l'antenne définie par un angle d'ouverture à -3dB de 20°, ce qui correspond à une distance maximale de communication (en bordure de couverture) pour H = 550 km : $D_{max}$ = 560km,
- « Path Loss » maximale : PL = 155dB (comme indiqué par exemple à la page web https://en.wikipedia.org/wiki/Path loss),
- Gain de l'antenne d'émission : $G_{tx}$ = 15dBi , et
- Gain moyen de l'antenne de réception : $G_{rx}$ = 0.5dBi.

On définit les pertes au nadir du satellite comme suit :

$$PL + L_{atm} + L_{pol} + L_I = 160.5dB,$$

et
les pertes à -3dB comme suit :

$$Pertes@3dB = PL + L_{atm} + L_{pol} + L_I = 163.5dB$$

Pour que le terminal de télécommunication puisse démoduler le signal diffusé en mode BLE 125k S=8 par le satellite, il faut une puissance minimale Min(Prx) de réception :

$$Min(P_{rx}) = S + Marge = -103 + 4 = -99dBm$$

L'équation des télécommunications permet d'écrire que la puissance d'émission Ptx vaut :

$$Ptx = Min(Prx) + Pertes@3dB - (G_{tx} + G_{rx}).$$

En remplaçant par les valeurs numériques ci-dessus on obtient :
Ptx = -99 +163.5 - 15.5 = 49dBm, ce qui correspond à environ 79.5W.

La PIRE satellite vaut donc : Ptx + Gtx = 64dBm.

On constate qu'avec les hypothèses réalistes du calcul détaillé ci-dessus, la sensibilité S requise est atteinte pour une puissance de quelques dizaines de Watt, ce qui correspond à des valeurs de puissance d'émission tout-à-fait classiques pour les moyens de communication 13.

Bien évidemment, d'autres courbes, et donc d'autres puissances minimales de transmission, sont possibles en fonction du protocole de télécommunication utilisé pour diffuser les informations. En particulier, le protocole « BLE 125k s=0 », pour lequel un mode de réalisation est décrit, pourra faire l'objet d'évolutions en normalisation dans le futur qui pourront éventuellement impacter cette courbe de performance. En outre, d'autres modes du protocole BLE, associés à des débits supérieurs, par exemple de 250kbits/s, 500 kbits/s ; 1M ou encore 2M pourraient aussi être utilisés.

Il apparaît en tout cas clairement que l'utilisation de ce mode de fonctionnement de la norme Bluetooth permet la diffusion d'information depuis un satellite vers des terminaux 2 au sol, avec des capacités habituelles pour les moyens de télécommunication 13 et conformes aux exigences d'un système embarqué.

D'autres modes de réalisation sont évidemment possibles, notamment en fonction de l'évolution des différentes normes de télécommunication dans le futur, ou de l'apparition de nouvelles normes.

Dans le cas d'un satellite défilant (en orbite basse ou autre), le déplacement du satellite relativement aux terminaux au sol implique une déformation du signal transmis par effet Doppler (décalage fréquentiel).

Le protocole Bluetooth étant prévu pour la communication entre objets proches avec des vitesses relatives nulles ou faibles, il ne permet pas de dispositif pour récupérer nativement ces déformations du signal.

Des simulations effectuées par les inventeurs ont démontré une perte de sensibilité de l'ordre de 4dB et un taux de perte de paquets de l'ordre de 10-2.

Selon un mode de réalisation de l'invention, les moyens de traitement 12 sont adaptés pour pré-compenser le décalage fréquentiel lié à l'effet Doppler en fonction d'une position du satellite, d'une position des terminaux de télécommunication et de la vitesse du satellite par rapport au sol. Cette pré-compensation vise à annihiler, ou tout du moins, fortement réduire la perte en sensibilité et l'augmentation du taux de perte de paquets.

Cette pré-compensation est en effet possible dans la mesure où les moyens de télécommunication 13 ont connaissance de la position des terminaux mobiles 2 vers lesquels les informations sont diffusés puisque ces moyens sont directifs (c'est-à-dire sur l'empreinte au sol du cône de diffusion 50).

Si l'angle solide de ce cône de diffusion est suffisant faible, on peut estimer négligeable les différences liées à l'effet Doppler entre les différentes positions de cette empreinte au sol.

Cette pré-compensation peut être effectuée par le dispositif 10 en prétraitant l'enveloppe complexe du signal avant diffusion.

Si on note x(n) le signal à diffuser (qui serait donc effectivement diffusé si on ne prenait pas en compte l'effet Doppler), selon un mode de réalisation, on forme un signal pré-compensé y(n) défini par :

[Math. 1]

$$y(n) = x(n).\, e^{-j\hat{\theta}_{D,S}(n)}$$

Dans cette expression, $\hat{\theta}_{D,S}(n)$ représente la phase instantanée estimée représentant la variation Doppler à compenser sur la surface S, qui représente l'empreinte au sol du cône de diffusion 50.

Ainsi, le signal reçu étant perturbé naturellement par l'effet Doppler $\theta_{D,S}(n)$ s'écrira :

[Math. 2]

$$z(n) = y(n).\, e^{j\theta_{D,S}(n)} + w(n)$$

La grandeur w(n) représente le bruit thermique du récepteur.

En utilisation l'expression du signal pré-compensé y(n), cette expression peut s'écrire :

[Math. 3]

$$z(n) = x(n).\, e^{-j\hat{\theta}_{D,S}(n)}.\, e^{j\theta_{D,S}(n)} + w(n)$$

Soit :

$$z(n) = x(n).\, e^{\varepsilon_{D,S}(n)} + w(n)$$

$\varepsilon_{D,S}(n)$ représente l'erreur d'estimation de l'effet Doppler, exprimée par :

[Math. 4]

$$\varepsilon_{D,S}(n) = \theta_{D,S}(n)\text{-}\hat{\theta}_{D,S}(n)$$

La variation de la phase instantanée $\hat{\theta}_{D,S}(n)$ provoquée par l'effet Doppler peut être estimée de façon déterministe en connaissant :

la position du satellite,
la position de la zone au sol vers laquelle les informations doivent être diffusée (correspondant à l'empreinte au sol du cône de diffusion 50),

la fréquence de la porteuse,

la vitesse relative du satellite par rapport au sol (ou au terminal de télécommunication, s'il est en mouvement, sachant que vu la vitesse du satellite par rapport à celle du terminal, cette dernière peut être négligée).

Cette estimation vise à minimiser l'erreur d'estimation $\varepsilon_{D,S}(n)$

L'estimation de la phase instantanée peut s'obtenir en utilisant les équations de la physique permettant de calculer l'effet Doppler. Différents modes de réalisation de ces aspects calculatoires sont bien décrits dans la littérature technique. On peut par exemple citer l'article « Doppler Characterization for LEO Satellites » de Irfan Ali, Naofal Al-Dhahir et John E. Hershey in IEEE Transactions on Communications, vol. 46, no. 3, mars 1998.

Les terminaux de télécommunication 2 qui sont dans la zone de réception (empreinte au sol du cône de diffusion) peuvent donc recevoir les informations diffusées par le satellite avec une puissance suffisante permettant leur bon traitement (démodulation avec un taux d'erreur suffisamment bas pour permettre la reconstruction des informations secondaires déterminées par les moyens de traitement 12).

Comme on l'a vu précédemment, les terminaux peuvent être des terminaux de l'état de l'art. En particulier, les moyens habituels de télécommunication suffisent pour leur permettre de recevoir les informations secondaires diffusés par le satellite. Ainsi, il n'est pas nécessaire de prévoir des antennes particulières, des circuits de démodulation particuliers, etc.

Comme on a vu, un mode de réalisation de l'invention utilise le protocole Bluetooth, en particulier le mode de fonctionnement BLE 125k s=8 de ce protocole. La vaste majorité des terminaux de télécommunication sont nativement adaptés pour recevoir des informations diffusées selon ce protocole.

Le terminal de télécommunication peut être de différents types. Il peut s'agir d'un terminal fixe (ordinateur, appareil de télévision, etc.), ou mobile (ordinateur portable, tablette, téléphone mobile, etc.)

Le terminal de télécommunication comprend une application logicielle 20 adaptée pour recevoir en continu un flux de données dans un canal prédéfini. Comme expliqué plus haut, ce canal peut correspondre au protocole de télécommunication Bluetooth, et plus particulièrement un mode de diffusion de ce protocole tel que « BLE 125k S=8 ».

L'application logicielle est également adaptée pour analyser le contenu de ce flux de données afin de détecter lesdites informations secondaires, déterminer au sein de celle-ci des données permettant de déclencher, le cas échéant, une action sur l'interface homme-machine du terminal de télécommunication.

Ces données peuvent notamment être une géolocalisation et/un type de situation.

L'application logicielle peut être adaptée pour comparer cette géolocalisation à la géolocalisation du terminal et ne déclencher une action que si ces deux géo-localisations sont suffisamment proches. Cette notion de proximité peut être fixe, paramétrable, ou adaptable par exemple en fonction d'un type de situation ou d'une sévérité.

L'application logicielle peut être adaptée pour également comparer ce type de situation à des paramètres fixés par l'utilisateur du terminal de télécommunication indiquant le type de services auquel il souhaite souscrire.

Ces paramètres peuvent être fixés par l'application elle-même, de sorte que plusieurs versions de l'application peuvent exister, chacune correspondant par exemple à un type d'utilisateur (grand public, professionnels de la sécurité, etc.), ou à a des champs applicatifs différents.

Un exemple d'application peut être l'annonce d'une situation critique (incendie, inondation, tremblement de terre, crue important, etc.) à une population concernée. La détection de la situation critique peut être effectuée par un satellite d'observation à partir d'informations primaires acquises et analysées comme expliquée ci-dessus. Elle peut être effectuée par d'autres mécanismes également et diffusée par un satellite de télécommunication.

Les terminaux 2 reçoivent les flux de diffusion Bluetooth lorsqu'ils sont dans la zone de diffusion (empreinte au sol du cône de diffusion 50) du satellite. Si l'application 20 est convenablement configurée, elle peut analyser ce flux entrant et déterminer si une alarme doit être déclenchée via l'interface homme-machine (affichage d'un signal ou message sur un écran, alarme sonore, vibrations, etc.)

D'autres applications sont possibles, dans lesquelles des utilisateurs souhaitent être alertés d'une situation particulière déterminé par un satellite ou par d'autres systèmes.

Cette détermination peut comprendre la vérification que la localisation du terminal est effectivement dans une zone concerné par la situation critique (de façon plus fine que pourrait le faire le mécanisme de diffusion du satellite) ou si l'utilisation a effectivement souscrit au service d'alerte par exemple.

Ainsi, selon l'invention, les informations sont diffusées directement d'un satellite aux terminaux de télécommunication. Elles ne transitent pas par d'autres dispositifs. Dès lors, en cas de situation critique, notamment de catastrophe naturelle, le mécanisme de l'invention permet de s'affranchir de

l'endommagement, voire la destruction, de l'infrastructure de télécommunication au sol,

La présence d'un réseau sol aux endroits concernés,

l'abonnement à un opérateur,

l'engorgement de cette même infrastructure du fait à la fois des nombreuses communication initiés par la population lors de ce genre d'événement, et d'une éventuelle destruction partielle des dispositifs de l'infrastructure de télécommunication.

L'invention permet donc de maintenir un canal de communication vers les personnes concernées, éventuellement sinistrées, de façon résiliente.

En outre, certaines régions sont peu couvertes par des infrastructures de télécommunication (filaire, cellulaire, WiFi, etc.). C'est notamment le cas de zones rurales profondes. Auquel cas, l'invention permet d'alerter ou, plus généralement d'envoyer des informations secondaires, vers les terminaux mobiles en l'absence d'une infrastructure de télécommunication.

Par ailleurs, selon des modes de réalisation de l'invention, elle permet de tirer profit des capacités grandissantes des satellites d'observation en transmettant directement un résultat d'analyse vers les terminaux mobiles de télécommunication des utilisateurs finaux.

Ceux-ci peuvent ainsi obtenir au plus tôt ces résultats, sans l'intermédiaire de stations au sol effectuant des traitements des informations ou même de la retransmission. Celles-ci ne forment ainsi plus des goulets d'étranglement rallongeant la chaine de transmission d'information et ralentissant la réception des informations pertinentes par les utilisateurs.

Cette capacité d'une transmission directe depuis les satellites vers les utilisateurs ouvre la voie à de nouvelles applications et à de nouveaux services notamment dans les pays en développement ou dans les régions où la couverture de télécommunication au sol n'est pas suffisante (zones forestières, déserts, etc.).

Bien entendu, la présente invention n'est pas limitée aux exemples et au mode de réalisation décrits et représentés, mais est défini par les revendications. Elle est notamment susceptible de nombreuses variantes accessibles à l'homme de l'art.

## Revendications

1. Dispositif (10) apte à être embarqué sur un satellite (1), comportant des moyens de télécommunication (13) pour diffuser des informations directement vers au moins un terminal de télécommunication (2) au sol, **caractérisé en ce que** les moyens de télécommunications sont adaptés pour diffuser lesdites informations via le protocole de communication Bluetooth à basse énergie, BLE, selon un mode « publicité », selon lequel aucune connexion entrante n'est acceptée, ledit au moins un terminal de télécommunication (2) étant compatible avec ledit protocole de communication et configuré pour recevoir lesdites informations sans envoyer aucune demande de connexion vers les moyens de communications du satellite, lesdits moyens de télécommunication comprenant :

   - une antenne directive adaptée pour émettre un signal portant lesdites informations dans un cône de diffusion, avec une puissance d'émission supérieure ou égale à quelques Watts dans une bande de fréquences entre 2.4 et 2.8 GHz, un débit d'au moins 125 kbits/s, ladite puissance d'émission étant déterminée de sorte qu'une puissance d'un signal reçu par au moins un dit terminal situé dans le cône de diffusion soit au-dessus d'une sensibilité donnée de réception dudit terminal pour ledit mode « publicité », en fonction d'une élévation du satellite par rapport au sol, d'une directivité de l'antenne, de paramètres de pointage du satellite et de pertes de transmission standard liées à une traversée de l'atmosphère.

2. Dispositif selon la revendication 1, pour satellite d'observation, comportant en outre :

   - au moins un capteur (11) pour acquérir des informations primaires
   - des moyens de traitement (12) pour analyser lesdites informations primaires pour détecter au sein desdites informations primaires une situation correspondant à un critère, et déterminer des informations secondaires relatives à ladite situation ; et
   - lesdits moyens de télécommunication (13) étant prévus pour transmettre lesdites informations secondaires au sein desdites informations.

3. Dispositif selon la revendication 2, dans lequel lesdites informations primaires sont des images.

4. Dispositif selon l'une des revendications précédentes, dans lequel les moyens de télécommunication sont adaptés pour diffuser lesdites informations via le protocole Bluetooth Basse Energie, BLE à 125kbits/s avec S=8 symboles par bit d'informations, ladite sensibilité du terminal de télécommunication étant de l'ordre de -103dBm.

5. Dispositif selon l'une des revendications 2 à 4, dans lequel lesdits moyens de traitement sont adaptés pour pré-compenser un décalage fréquentiel lié à l'effet Doppler en fonction d'une position dudit satellite, d'une position dudit au moins un terminal de télécommunication, et de la vitesse dudit satellite par rapport au sol.

6. Dispositif selon l'une des revendications 2 à 5, dans lequel lesdites informations secondaires sont représentatives d'une alerte.

7. Satellite comportant un dispositif selon l'une des revendications précédentes.

8. Système comportant au moins un satellite (1) selon la revendication précédente et ledit au moins un terminal de télécommunication (2).

9. Procédé de diffusion d'informations depuis un satellite (1) directement vers au moins un terminal de télécommunication (2) au sol, **caractérisé en ce que** ledit procédé met en œuvre le protocole Bluetooth à basse énergie, BLE, en mode « Publicité », selon lequel des moyens de télécommunications du satellite sont adaptés pour diffuser lesdites informations sans accepter aucune connexion entrante et ledit au moins un terminal de télécommunication (2) est compatible avec ledit protocole et configuré pour recevoir lesdites informations sans envoyer aucune demande de connexion vers les moyens de communications du satellite, ledit procédé comprenant :

   - l'émission par une antenne directive adaptée d'un signal portant lesdites informations dans un cône de diffusion, avec une puissance d'émission supérieure ou égale à quelques Watts, dans une bande de fréquences entre 2.4 et 2.8 GHz, avec un débit d'au moins 125 kbits/s, ladite puissance d'émission étant déterminée de sorte qu'une puissance d'un signal reçu par au moins un dit terminal situé dans le cône de diffusion, soit au-dessus d'une sensibilité de réception dudit terminal, correspondant audit mode « Publicité », en fonction d'une élévation du satellite par rapport au sol, d'une directivité de l'antenne, de paramètres de pointage du satellite et de pertes de transmission standard liées à une traversée de l'atmosphère.

10. Programme d'ordinateur comprenant des instructions qui, lorsque le programme est exécuté par un ordinateur, conduisent celui-ci à mettre en œuvre le procédé selon la revendication précédente.

**Patentansprüche**

1. Vorrichtung (10), die geeignet ist, an Bord eines Satelliten (1) mitgeführt zu werden, aufweisend Telekommunikationsmittel (13) zum direkten Ausstrahlen von Informationen an mindestens ein Telekommunikationsendgerät (2) am Boden, **dadurch gekennzeichnet, dass** die Telekommunikationsmittel angepasst sind, um die Informationen über das Bluetooth-Low-Energy-Kommunikationsprotokoll, BLE, gemäß einem "Werbe"-Modus auszustrahlen, gemäß dem keine eingehende Verbindung akzeptiert wird, wobei das mindestens eine Telekommunikationsendgerät (2) mit dem Kommunikationsprotokoll kompatibel und für den Empfang der Informationen konfiguriert ist, ohne eine Verbindungsanfrage an die Kommunikationsmittel des Satelliten zu senden, wobei die Telekommunikationsmittel umfassen:

   - eine Richtantenne, die angepasst ist, um ein Signal, das die Informationen trägt, in einem Ausstrahlungskegel mit einer Sendeleistung größer oder gleich einigen Watt in einem Frequenzband zwischen 2,4 und 2,8 GHz und mit einer Datenrate von mindestens 125 kbit/s auszusenden, wobei die Sendeleistung so bestimmt wird, dass eine Leistung eines Signals, das von mindestens einem im Ausstrahlungskegel befindlichen Endgerät empfangen wird, über einer gegebenen Empfangsempfindlichkeit des Endgeräts für den "Werbe"-Modus liegt, in Abhängigkeit von der Höhe des Satelliten relativ zum Boden, der Richtwirkung der Antenne, den Ausrichtungsparametern des Satelliten und den standardmäßigen Übertragungsverlusten, die mit dem Durchqueren der Atmosphäre verbunden sind.

2. Vorrichtung nach Anspruch 1, für Beobachtungssatelliten, ferner aufweisend:

   - mindestens einen Sensor (11) zum Erfassen von Primärinformationen
   - Verarbeitungsmittel (12) zum Analysieren der Primärinformationen, um innerhalb der Primärinformationen eine Situation zu erkennen, die einem Kriterium entspricht, und um Sekundärinformationen in Bezug auf diese Situation zu bestimmen; und
   - wobei die Telekommunikationsmittel (13) ausgelegt sind, um die Sekundärinformationen innerhalb der Informationen zu übertragen.

3. Vorrichtung nach Anspruch 2, wobei die Primärinformationen Bilder sind.

4. Vorrichtung nach einem der vorstehenden Ansprüche, wobei die Telekommunikationsmittel angepasst sind, um die Informationen über das Bluetooth-Low-Energy-Protokoll, BLE, mit 125 kbits/s und S = 8 Symbolen pro Informationsbit auszustrahlen, wobei die Empfindlichkeit des Telekommunikationsendgeräts in der Größenordnung von -103 dBm liegt.

5. Vorrichtung nach einem der Ansprüche 2 bis 4, wobei die Verarbeitungsmittel angepasst sind, um eine mit dem Doppler-Effekt verbundene Frequenzverschiebung in Abhängigkeit von einer Position des Satelliten, einer Position des mindestens einen Telekommunikationsendgeräts und der Geschwindigkeit des Satelliten relativ zum Boden vorab zu kompensieren.

6. Vorrichtung nach einem der Ansprüche 2 bis 5, wobei die Sekundärinformationen einen Alarm darstellen.

7. Satellit mit einer Vorrichtung nach einem der vorstehenden Ansprüche.

8. System mit mindestens einem Satelliten (1) nach dem vorstehenden Anspruch und mindestens einem Telekommunikationsendgerät (2).

9. Verfahren zur direkten Ausstrahlung von Informationen aus einem Satelliten (1) an mindestens ein Telekommunikationsendgerät (2) am Boden,
**dadurch gekennzeichnet, dass** das Verfahren das Bluetooth-Low-Energy-Protokoll, BLE im "Werbe"-Modus verwendet, wobei die Telekommunikationsmittel des Satelliten angepasst sind, um die Informationen auszustrahlen, ohne eine eingehende Verbindung zu akzeptieren, und das mindestens eine Telekommunikationsendgerät (2) mit dem Protokoll kompatibel und konfiguriert ist, um die Informationen zu empfangen, ohne eine Verbindungsanfrage an die Kommunikationsmittel des Satelliten zu senden, wobei das Verfahren umfasst:

- die Aussendung eines Signals, das die Informationen trägt, durch eine angepasste Richtantenne in einem Ausstrahlungskegel mit einer Sendeleistung größer oder gleich einigen Watt in einem Frequenzband zwischen 2,4 und 2,8 GHz mit einer Datenrate von mindestens 125 kbit/s, wobei die Sendeleistung so bestimmt wird, dass die Leistung eines Signals, das von mindestens einem im Ausstrahlungskegel befindlichen Endgerät empfangen wird, über einer Empfangsempfindlichkeit des Endgeräts liegt, die dem "Werbe"-Modus entspricht, in Abhängigkeit von der Höhe des Satelliten relativ zum Boden, der Richtwirkung der Antenne, den Ausrichtungsparametern des Satelliten und den standardmäßigen Übertragungsverlusten beim Durchqueren der Atmosphäre.

10. Computerprogramm, umfassend Anweisungen, die, wenn das Programm von einem Computer ausgeführt wird, diesen dazu veranlassen, das Verfahren nach dem vorstehenden Anspruch zu implementieren.

## Claims

1. A device (10) suitable for being placed on board a satellite (1), comprising telecommunication means (13) for broadcasting information directly to at least one telecommunication terminal (2) on the ground, **characterized in that** the telecommunication means are suitable for broadcasting said information via the Bluetooth Low Energy communication protocol, BLE, according to an "advertising" mode, according to which no incoming connection is accepted, said at least one telecommunication terminal (2) being compatible with said communication protocol and configured to receive said information without sending any connection request to the communication means of the satellite, said telecommunication means comprising:

- a directional antenna suitable for transmitting a signal carrying said information in a broadcast cone, with a transmission power greater than or equal to a few watts in a frequency band between 2.4 and 2.8 GHz, a data rate of at least 125 kbits/s, said transmission power being determined so that power of a signal received by at least one said terminal located in the broadcast cone is above a given sensitivity of reception of said terminal for said "advertising" mode, depending on an elevation of the satellite with respect to the ground, a directivity of the antenna, pointing parameters of the satellite and standard transmission losses related to passing through the atmosphere.

2. The device according to claim 1, for an observation satellite, further comprising:

   - at least one sensor (11) for acquiring primary information
   - processing means (12) for analyzing said primary information to detect within said primary information a situation corresponding to a criterion, and determining secondary information relating to said situation; and
   - said telecommunication means (13) being provided to transmit said secondary information within said information.

3. The device according to claim 2, wherein said primary information is images.

4. The device according to any of the preceding claims, wherein the telecommunication means are suitable for broadcasting said information via the Bluetooth Low Energy protocol, BLE, at 125 kbits/s with S=8 symbols per bit of information, said sensitivity of the telecommunication terminal being in the order of -103 dBm.

5. The device according to any of claims 2 to 4, wherein said processing means are suitable for pre-compensating for a frequency shift related to the Doppler effect depending on a position of said satellite, a position of said at least one telecommunication terminal, and the speed of said satellite relative to the ground.

6. The device according to any of claims 2 to 5, wherein said secondary information is representative of an alert.

7. A satellite comprising a device according to any of the preceding claims.

8. A system comprising at least one satellite (1) according to the preceding claim and said at least one telecommunication terminal (2).

9. A method for broadcasting information from a satellite (1) directly to at least one telecommunication terminal (2) on the ground, **characterized in that** said method implements the Bluetooth Low Energy protocol, BLE, in "Advertising" mode, according to which telecommunication means of the satellite are suitable for broadcasting said information without accepting any incoming connection and said at least one telecommunication terminal (2) is compatible with said protocol and configured to receive said information without sending any connection request to the communication means of the satellite, said method comprising:

   - transmission by a suitable directional antenna of a signal carrying said information in a broadcast cone, with a transmission power greater than or equal to a few watts, in a frequency band between 2.4 and 2.8 GHz, with a data rate of at least 125 kbits/s, said transmission power being determined so that power of a signal received by at least one said terminal located in the broadcast cone is above a reception sensitivity of said terminal, corresponding to said "Advertising" mode, depending on an elevation of the satellite with respect to the ground, a directivity of the antenna, pointing parameters of the satellite and standard transmission losses related to passing through the atmosphere.

10. A computer program product comprising instructions which, when the program is executed by a computer, cause said computer to implement the method according to the preceding claim.

[Fig. 1]

[Fig. 2]

[Fig. 3]

[Fig. 4]

## RÉFÉRENCES CITÉES DANS LA DESCRIPTION

**Documents brevets cités dans la description**

- US 2022216896 A1
- WO 2022076548 A1
- US 20180239948 A1

**Littérature non-brevet citée dans la description**

- *Understanding Bluetooth Range*, 2022, https://www. bluetooth.com/learn-about-bluetooth/key-attributes/range
- **JEAN-FRANÇOIS LENAT**. *Aléas et surveillance de l'activité volcanique 2 : sismologie, déformation et télédétection*, 2022, ISBN 9781789480450
- **BONAKDARI, H.** ; **ZAJI, A. H.** ; **SOLTANI, K.** ; **GHARABAGHI, B.** Amélioration de la précision d'un système d'alerte de crue par télédétection à l'aide d'une méthode de prétraitement multi-objectifs pour la détection et l'élimination des défauts de signal. *Comptes Rendus Géosciences*, 2020, vol. 352, 73-86
- **CATRY, T.** ; **RÉVILLION, C.** ; **MOUQUET, P.** ; **PENNOBER, G.** Apports de l'imagerie satellite pour le suivi de l'impact des événements cycloniques à Madagascar. Complémentarité des échelles et des capteur. *EchoGéo*, 2020, vol. 51
- *Core specification*, 13 July 2021, http://www.bluetoothe.com.
- **IRFAN ALI** ; **NAOFAL AL-DHAHIR** ; **JOHN E. HERSHEY**. Doppler Characterization for LEO Satellites. *IEEE Transactions on Communications*, March 1998, vol. 46 (3)